# EUROPÄISCHE PATENTANMELDUNG

(11) **EP 0 637 524 A1**
(43) Veröffentlichungstag der Anmeldung: **08.02.1995**
(21) Anmeldenummer: 94110952.2
(22) Anmeldetag: 14.07.1994
(51) Int. Cl.: B60Q 1/52, F21Q 3/02

(54) **Warnleuchte, vorzugsweise für Fahrzeuge**

(30) Priorität: 02.08.1993 DE 4325901
(71) Anmelder: ROBERT BOSCH GMBH, 70442 Stuttgart (DE)
(72) Erfinder: Reiser, Heinrich, Dipl.-Ing. (FH), D-70199 Stuttgart (DE); Spaeth, Matthias, Dipl.-Ing. (BA), D-71696 Moeglingen (DE)

(57) **Zusammenfassung**

Die Erfindung betrifft eine Warnleuchte, vorzugsweise für Fahrzeuge, mit einem lichtdurchlässigen Gehäuse (18), das eine Lichtquelle (38) und ein die Lichtquelle (38) umgebendes, aus mehreren Linsen (42, 44) bestehendes optisches System (14) umschließt, welches von einem Motor (16) drehend angetrieben ist und das Licht in eine der Anzahl der Linsen (42, 44) entsprechende Zahl von umlaufenden Lichtbündeln faßt. Es wird vorgeschlagen, daß die die Lichtbündel erzeugenden Linsen (42, 44) in Fresneloptik ausgeführt sind und einen die Lichtquelle (38) radial umgebenden Hohlkörper (48) bilden. Dadurch ergibt sich eine kostengünstige, montage- und wartungsgerechte Ausführung, bei welcher ein hoher Anteil des von der Lichtquelle (38) abgegebenen Lichtes für die Bildung der warnwirksamen Lichtbündel genutzt werden kann.

## Beschreibung

### Stand der Technik

Die Erfindung geht aus von einer Warnleuchte nach der Gattung des Hauptanspruchs. Bei Warnleuchten dieser Gattung, die auch als Rundumkennleuchten bezeichnet und vorzugsweise von Polizei, Feuerwehr und Hilfsdiensten eingesetzt werden, ist der motorische Antrieb des optischen Systems einem mechanischen Verschleiß unterworfen, der in hohem Maße von der Drehfrequenz des optischen Systems abhängt und die Lebensdauer der Warnleuchte maßgeblich mitbestimmt. Die gattungsmäßige Ausbildung des optischen Systems mit mehreren Linsen hat gegenüber einer herkömmlichen Ausführung mit einem umlaufenden Reflektor den Vorteil,daß sich eine vorgegebene Blinkfrequenz bei einer Drehfrequenz des Systems ergibt, die nur einen der Anzahl der Linsen entsprechenden Bruchteil der Drehfrequenz der Ausführung mit umlaufendem Reflektor beträgt.

Bei einer bekannten Ausführung einer Warnleuchte der gattungsmäßigen Art ist das optische System mit drei in Umfangsrichtung um 120° zueinander versetzten sphärischen Glaslinsen mit kreisrundem Grundflächenprofil versehen, die je in einem Rahmen gefaßt sind, der schwenkbar an einer vom Motor angetriebenen Tragplatte angelenkt ist. Diese optisch aufwendige Ausführung ergibt neben scharfen Lichtbündeln einen verhältnismäßig großen Anteil an Streulicht, welches durch die von den Linsen nicht abgedeckten Umfangsbereiche eines durch die Linsen umgrenzten Hohlraums um die Lichtquelle austritt.

### Vorteile der Erfindung

Die erfindungsgemäße Anordnung mit den kennzeichnenden Merkmalen des Hauptanspruchs hat den Vorteil, daß der durch die Fresnellinsen gebildete Hohlkörper an seinem Umfang keine freien Lichtaustrittsbereiche hat, so daß sich eine wesentlich höhere Lichtausbeute als bei der bekannten Ausführung ergibt. Ferner benötigen die Fresnelelemente nur eine geringe Materialstärke, so daß durch deren Einsatz der Durchmesser der Warnleuchte materialsparend und zur Verringerung des Luftwiderstandes kleiner als bisher bemessen werden kann.

Durch die in den Unteransprüchen aufgeführten Maßnahmen sind vorteilhafte Weiterbildungen der Anordnung nach dem Hauptanspruch möglich.

Besonders vorteilhaft ist es, wenn die Fresnellinsen aus Kunststoff bestehen. Dadurch ergibt sich eine beachtliche Gewichtsersparnis gegenüber optischen Systemen mit sphärischen Glaslinsen, die in Verbindung mit der möglichen Durchmesserverringerung eine den Antrieb zusätzlich schonende Verringerung des Trägerheitsmomentes der sich drehenden Baueinheit ergibt.

Eine besonders hohe Lichtausbeute ergibt sich, wenn der durch die Fresnellinsen gebildete Hohlkörper am oberen und/oder unteren Endbereich mit schräg zur Mittelachse der Warnleuchte gerichteten, in Einzelprismen aufgelösten Prismenbereichen versehen ist. Dadurch läßt sich das von der Lichtquelle abgegebene Licht nahezu vollständig für die zu erzeugenden Lichtbündel ausnützen und ein Verlust durch Reflexion an den Innenflächen des Hohlkörpers verringern.

Der die Lichtquelle umgebende Hohlkörper kann einstückig ausgebildet oder vorteilhaft aus einer der gewünschten Anzahl der Lichtbündel entsprechenden Zahl von aneinanderstoßenden Einzelsegmenten zusammengesetzt sein, die je mit einem Feld von Fresnellinsenelementen und gegebenenfalls mit zusätzlichen Prismenbereichen am oberen und unteren Endbereich versehen sind.

Die Ausbildung des optischen Systems mit flach bauenden Fresnellinsen eröffnet ferner die Möglichkeit, die Linsen so auszubilden, daß sie ohne eine besondere Fassung unmittelbar mit einer vom Motor angetriebenen Tragplatte verbindbar sind. Zu diesem Zweck wird eine Steckverbindung der Fresnellinsen mit der Tragplatte vorgeschlagen, die vorteilhaft durch Rastmittel gesichert sein kann. Das ergibt eine leicht zu montierende und zu wartende, robuste Ausführung, bei der einfach die Fresnellinsen bzw. der aus diesen gebildete Hohlkörper von der Tragplatte abgezogen und unter fließendem Wasser gereinigt werden können.

### Zeichnung

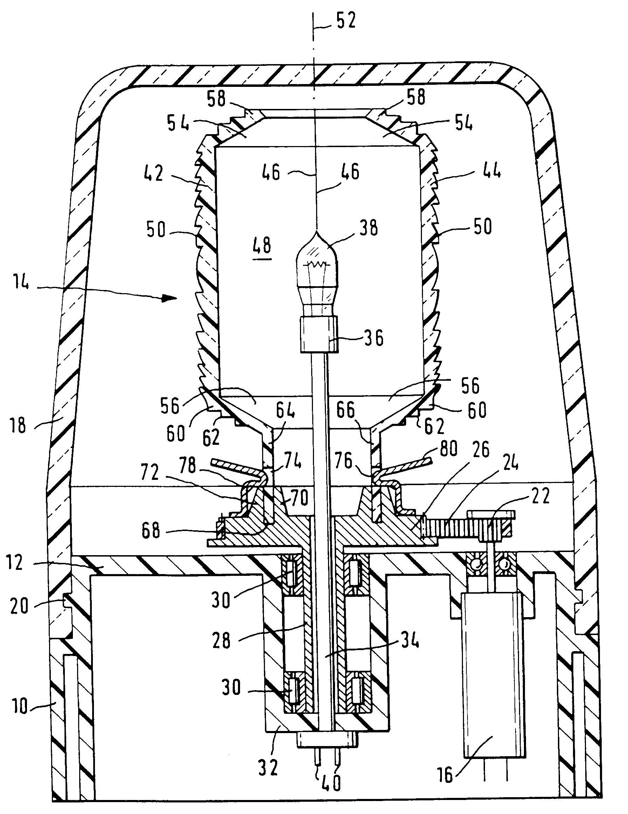

Ein Ausführungsbeispiel der Erfindung ist in der Zeichnung dargestellt und in der nachfolgenden Beschreibung näher erläutert. Die einzige Figur zeigt einen Vertikalschnitt durch eine Warnleuchte mit zwei umlaufenden Lichtbündeln.

### Beschreibung des Ausführungsbeispiels

Die Warnleuchte hat einen topfartigen Sockel 10, dessen obenliegender Boden 12 ein als Ganzes mit der Bezugszahl 14 bezeichnetes optisches System drehbar lagert und einen zu dessen Drehung vorgesehenen Antriebsmotor 16 trägt. Auf den Sockel 10 ist ein durchsichtiges, in einer Warnfarbe getöntes Schutzgehäuse 18 aufgesteckt, das mit dem Sockel 10 durch einen ringförmigen Rastvorsprung 20 lösbar verbunden ist.

Der Antriebsmotor 16 treibt über ein Zahnritzel 22 und einen Zahnriemen 24 eine als Zahnriemenrad ausgebildete Tragplatte 26 an, die einen hohlen nabenförmigen Ansatz 28 hat, der über Rollenlager 30 in einem an den Boden 12 einstückig angeformten Lagergehäuse 32 drehbar gelagert ist. Durch die Tragplatte 26 erstreckt sich ein Haltestab 34, der oben eine Fassung 36 mit einer Kühllampe 38 trägt und unten am Lagergehäuse 32 befestigt ist. Zwei elektrische Anschlüsse 40 dienen zur Stromversorgung der Kühllampe 38 und sind über nicht dargestellte Leitungen im Haltestab 34 mit dieser elektrisch verbunden.

Zum Bilden der beiden umlaufenden Lichtbündel sind zwei halbschalenförmig gestaltete, dünnwandige Fresnellinsen 42, 44 aus Kunststoff vorgesehen, die an ihren gegebenenfalls durch Nut und Feder miteinander verzahnten Längskanten 46 aneinanderstoßen und einen die Glühlampe 38 radial umgebenden Hohlkörper 48 bilden. An ihrer Außenseite sind die Fresnellinsen 42, 44 mit den einzelnen Linsenelementen 50 versehen, die so geformt sind, daß sie die ankommenden Lichtstrahlen zu zwei Strahlenbündeln zusammenfassen, die im rechten Winkel zur Mittelachse 52 der Warnleuchte ausgerichtet sind und sich diametral gegenüberliegen. Am oberen und unteren Endbereich 54 bzw. 56 des Hohlkörpers 48 weisen die Fresnellinsen 42, 44 schräg zur Mittelachse 52 gerichtete, sektorförmige Prismenbereiche 58 bzw. 60 auf, die an der Oberfläche mit Einzelprismen 62 versehen sind. Diese sind so geformt, daß die auf die Linsenbereiche 58, 60 auftreffenden Lichtstrahlen ebenfalls umgelenkt und zur Lichtbündelung genutzt werden.

An dem der Tragplatte 26 zugekehrten unteren Ende sind die beiden Fresnellinsen 42, 44 je mit einem im Durchmesser verkleinerten, halbschalenförmigen Ansatz 64 bzw. 66 versehen, der passend in eine Ringnut 68 eingreift, die zwischen einem inneren Ringkragen 70 und einem äußeren Ringkragen 72 der Tragplatte 26 gebildet ist. Jeder Ansatz 64, 66 ist mit einem örtlichen Durchbruch 74 versehen, in den eine Rastnase 76 an einer federnden Rastzunge 78 eingreift, die am äußeren Ringkragen 72 befestigt ist. Die beim Einstecken der Fresnellinsen 42, 44 vorübergehend federnd ausweichenden Rastnasen 76 halten die eingesteckten Fresnellinsen 42, 44 in der vorgeschriebenen Lage schüttelsicher fest. Zum Abnehmen der Fresnellinsen 42, 44 von der Tragplatte 26 können die Rastnasen 76 durch Niederdrücken von Laschen 80 an den Rastzungen 78 radial aus den Durchbrüchen 74 herausgeschwenkt werden.

Der Erfindungsgedanke ist nicht auf die Anordnung von zwei Fresnellinsen und nicht auf deren schalenförmige Ausbildung beschränkt. Anstelle von zwei Fresnellinsen könnten beispielsweise auch drei schalenförmige, sich zu einem Hohlkörper ergänzende Fresnellinsen angeordnet sein. Bei Anordnung von mindestens drei Fresnellinsen könnten diese auch als ebene Platten ausgebildet sein, wobei der so gebildete Hohlkörper einen prismatischen Querschnitt mit einer der Anzahl der Fresnellinsen entsprechenden Zahl von Seitenlinien erhält.

## Patentansprüche

1. Warnleuchte, vorzugsweise für Fahrzeuge, mit einem lichtdurchlässigen Gehäuse, das eine Lichtquelle und ein die Lichtquelle umgebendes, mehrere Linsen aufweisendes optisches System umschließt, welches von einem Motor drehend angetrieben ist und das Licht in eine der Anzahl der Linsen entsprechende Zahl von umlaufenden Lichtbündeln faßt, dadurch gekennzeichnet, daß die die Lichtbündel erzeugenden Linsen (42, 44) in Fresneloptik ausgeführt sind und einen die Lichtquelle (38) umgebenden Hohlkörper (48) bilden.

2. Warnleuchte nach Anspruch 1, dadurch gekennzeichnet, daß die Fresnellinsen (42, 44) aus Kunststoff bestehen.

3. Warnleuchte nach Anspruch 1 oder 2, dadurch gekennzeichnet, daß die Fresnellinsen (42, 44) am oberen und/oder unteren Endbereich (54 bzw. 56) des Hohlkörpers (48) mit schräg zur Mittelachse 52 der Warnleuchte gerichteten, in Einzelprismen (62) aufgelösten Prismenbereichen (58, 60) versehen sind.

4. Warnleuchte nach einem der vorhergehenden Ansprüche, dadurch gekennzeichnet, daß der die Lichtquelle (38) umgebende Hohlkörper (48) aus mindestens zwei aneinanderstoßenden Einzelsegmenten (42, 44) besteht, die je mit einem Feld von Fresnellinsenelementen (50) und gegebenenfalls mit zusätzlichen Prismenbereichen (58 60) am oberen und unteren Endbereich (54, 56) versehen sind.

5. Warnleuchte nach einem der vorhergehenden Ansprüche, dadurch gekennzeichnet, daß die den Hohlkörper (48) bildenden Fresnellinsen (42, 44) durch eine Steckverbindung (64 bis 80) an einer vom Antriebsmotor (16) angetriebenen Tragplatte (26) festgehalten sind.
